# EUROPÄISCHE PATENTSCHRIFT

(11) **EP 0 491 899 B1**
(45) Veröffentlichungstag und Bekanntmachung des Hinweises auf die Patenterteilung: **01.03.1995**
(21) Anmeldenummer: 91911823.2
(22) Anmeldetag: 26.06.1991
(51) Int. Cl.: B65G 47/248

(54) **VORRICHTUNG ZUM WENDEN VON KLEINGUT, INSBESONDERE PAKETEN AUF EINEM TRANSPORTBAND**
DEVICE FOR TURNING SMALL OBJECTS, IN PARTICULAR PARCELS, ON A CONVEYOR BELT
DISPOSITIF DE RETOURNEMENT DE MARCHANDISES DE PETITES DIMENSIONS, NOTAMMENT DE PAQUETS, SUR UNE BANDE CONVOYEUSE

(30) Priorität: 12.07.1990 DE 4022160
(43) Veröffentlichungstag der Anmeldung: 01.07.1992
(73) Patentinhaber: Licentia Patent-Verwaltungs-GmbH, 60596 Frankfurt (DE)
(72) Erfinder: MALOW, Siegmar, D-7750 Konstanz 19 (DE); VOGEL, Rainer, D-7730 Schwenningen (DE)
(74) Vertreter: Vogl, Leo, Dipl.-Ing.
(86) Internationale Anmeldenummer: EP9101196
(87) Internationale Veröffentlichungsnummer: WO9200905

(56) Entgegenhaltungen:
- DE-A- 3 214 457
- FR-A- 1 489 070
- US-A- 4 411 350
- PATENT ABSTRACTS OF JAPAN vol. 6, no. 232 (M-172)(1110) 18. November 1982 & JP-A-57131620

## Beschreibung

Die Erfindung bezieht sich auf eine Vorrichtung gemäß dem Oberbegriff des Anspruchs 1.

Es sind Wendevorrichtungen bekannt, bei denen durch eine schräge Rollenbahn eine Aufstellung des Kleingutes erfolgt oder durch Abkippen das Gut umgedreht wird.

Derartige Vorrichtungen weisen den Nachteil auf, daß sie eine genau definierte Lage des Gutes auf dem Förderband nicht ermöglichen.

Aus Patent Abstracts of Japan, Volume 6, No. 232 ist eine Vorrichtung zum Schwenken bekannt, bei der durch ein Gelenkgetriebe mit zwei Zylindern rechtwinklige Stäbe um 90° verschwenkbar sind um damit Kleingut um 90° zu drehen.

Aufgabe der Erfindung ist es, eine Vorrichtung zum Wenden von Kleingut zu schaffen, bei der das Gut um maximal 90° in jeder beliebige Stellung verschwenkbar ist. Die Vorrichtung soll außerdem so ausgebildet werden, daß die Weiterförderung des Gutes bündig mit dem vor- und nachlaufenden Förderband erfolgt.

Die erfindungsgemäße Lösung ist in den Merkmalen der Ansprüche 1 und 2 angegeben.

Ein Ausführungsbeispiel der Erfindung ist nachfolgend an Hand der beiliegenden Zeichnung beschrieben.
- Fig. 1: zeigt eine erfindungsgemäße Vorrichtung zum Wenden von Kleingut in perspektivischer Ansicht;
- Fig. 2: zeigt die Ausführung eines Schwenkgetriebes mit Gelenkstreben für die erfindungsgemäße Vorrichtung.

Mit 1 ist das Kleingut, ein Paket, bezeichnet, das auf einem Transportband 2 liegt. Das Transportband 2 transportiert das Paket in Richtung des Pfeiles zur Wendevorrichtung 3. Nach der Drehung des Paketes auf der Wendevorrichtung 3 läuft das Paket in die Transportstrecke 4 hochkant ein und wird in Richtung des Pfeiles weiterbefördert.

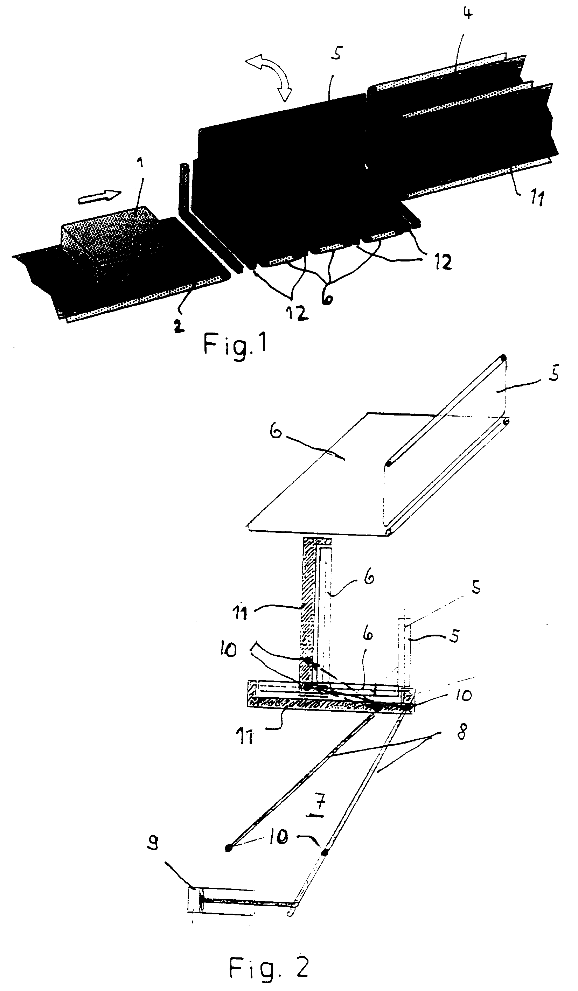

Die Vorrichtung zum Wenden des Kleingutes 1 besteht aus einem seitlichen Führungsteil 5 und in Richtung des Transportbandes 2 verlaufende Transportbänder 6. Die Transportbänder 6 können, wie in Fig. 2 gezeigt, auch einstückig ausgebildet sein. Ebenso kann das seitliche Führungsteil 5 als angetriebenes Transportband ausgebildet werden (Fig. 2).

Die Betätigung der Vorrichtung zum Wenden des Paketes erfolgt durch ein Schwenkgetriebe 7 das aus Gelenkstäben 8 und einem Pneumatikzylinder 9 besteht.

Die Förderbänder 5 und 6 laufen synchron und stehen senkrecht zueinander. Die Anlenkungspunkte 10 der Gelenkstäbe sind beliebig wählbar; sie müßen so aufeinander abgestimmt werden, daß eine Schwenkung maximal um 90° erfolgen kann. Dabei muß erfindungsgemäß die Schwenkung so erfolgen, daß die rechtwinklig aufeinander stehenden Transportflächen 5 und 6 derart verschwenkt werden, daß die senkrecht auf der Förderrichtung stehende Transportfläche 5 nach der Schwenkung bündig zur Transportfläche 2 verläuft und die vor dem Schwenkvorgang bündig in Richtung der Transportfläche 2 verlaufende Transportfläche 6 senkrecht auf der Transportfläche 5 in der Weise steht, daß sie mit den Seitenflächen 11 der Transportstrecke 4 eine Linie bildet.

Die Förderbänder 5 und 6 können auf einem Gestell 12 angeordnet sein, das durch die Gelenkstäbe 8 verschwenkt wird (Fig. 2). Dabei werden die gesamten Förderbänder um 90° verschwenkt.

Es ist auch möglich, wie in Fig. 1 gezeigt, zwischen den Teilförderbändern 6 und der Führungsfläche 5 eine Rechenkonstruktion aus rechtwinkligen Einzelstäben 12 anzuordnen, die durch ein Gestell an dem die Gelenkstäbe angreifen verbunden sind. Bei dieser Ausführungsform wird das Kleingut 1 durch die Stäbe 12 des Rechens angehoben und um 90° verschwenkt. Die Stäbe 12 des Rechens bewegen sich dabei nur in den Aussparungen zwischen den Teilförderbändern 6 und der Führungsfläche 5.

Beim Verschwenken werden die beiden Ausführungsformen die Transportflächen 5, 6 oder die rechtwinkligen Stäbe 12 derart um 90° verschwenkt, daß die auf der in Förderbandrichtung 2 bündig verlaufende Transportfläche 6 stehende Transportfläche 5 nach einem 90°-Schwenkvorgang bündig zur Transportbandfläche 2 liegt und die vor dem Schwenkvorgang bündig in Richtung Transportband 2 verlaufende Fläche 6 senkrecht zur Transportbandflache 2 steht.

## Patentansprüche

1. Vorrichtung zum Wenden von Kleingut, insbesondere Paketen auf einem Transportband, dadurch gekennzeichnet,
daß die Vorrichtung senkrecht aufeinander stehende Transportflächen (5, 6) aufweist die auf einem Gestell (11) angeordnet sind, die Transportflächen (5, 6) einen selbständigen Teil des Transportbandes bilden und über ein Schwenkgetriebe (7), das aus zwei nicht miteinander verbundenen, an dem Gestell (11) angreifenden, Gelenkstäben (8) und nur einem Pneumatikzylinder (9), der mit einem der Gelänkstäbe (8) zusammenwirkt, besteht, insgesamt derart um 90° verschwenkbar sind, daß die auf der in Richtung Transportband bündig verlaufende Transportfläche (6) stehende Transportfläche (5) nach einem 90°-Schwenkvorgang bündig zur Fläche des Transportbandes (2) liegt, und die vor dem Schwenkvorgang bündig in Richtung Transportband verlaufende Fläche (6) senkrecht zur Fläche des Transportbandes (2) steht.

2. Vorrichtung zum Wenden von Kleingut, insbesondere Paketen, auf einem Transportband, dadurch gekennzeichnet, daß die Vorrichtung senkrecht aufeinander stehende Transportflächen (5, 6) aufweist, die einen selbständigen Teil des Transportbandes bilden, und daß die Transportfläche (6) in Teilbänder unterteilt ist und zwischen den Teilbändern rechtwinklige Stäbe (12) angeordnet sind, die durch ein Gestell, an dem die Gelenkstäbe (8) eines Schwenkgetriebes (7) angreifen, verbunden sind, wobei das Schwenkgetriebe (7) aus zwei nicht miteinander verbundenen Gelenkstäben (8) und nur einem Pneumatikzylinder (9), der mit einem der Gelänkstäbe (8) zusammenwirkt, besteht, wobei die rechtwinkligen Stäbe (12) durch das Schwenkgetriebe (7) innerhalb von Zwischenräumen in den Transportflächen (5, 6) um 90° verschwenkbar sind.

## Claims

1. Device for turning small articles, especially parcels, on a transport belt, characterised thereby that the device comprises transport surfaces (5, 6) which stand vertically one on the other, are arranged on a frame (11), form an independent part of the transport belt and are pivotable in their entirety through 90° in such a manner by a pivot gear (7), which consists of two non-interconnected articulation rods (8) engaging the frame (11) and only one pneumatic cylinder (9), the cylinder co-operating with one of the articulation rods (8), that the transport surface (5), which stands on the transport surface (6) running flushly in the transport belt direction, after a 90° pivot operation lies flushly relative to the surface of the transport belt (2), and the surface (6), which before the pivot operation ran flushly in the transport belt direction, stands vertically relative to the surface of the transport belt (2).

2. Device for turning small articles, especially parcels, on a transport belt, characterised thereby, that the device comprises transport surfaces (5, 6) which stand vertically one on the other and form an independent part of the transport belt, and that the transport surface (6) is subdivided into partial belts and right-angled rods (12) are arranged between the partial belts and connected by a frame at which the articlation rods (8) of a pivot gear (7) engage, wherein the pivot gear (7) consists of two non-interconnected articulation rods (8) and only one pneumatic cylinder (9), the cylinder co-operating with one of the articulation rods (8), and wherein the right-angled rods (12) are pivotable by the pivot gear (7) through 90° within intermediate spaces in the transport surfaces (5, 6).

## Revendications

1. Dispositif pour le retournement d'articles de petite taille, en particulier des paquets, sur une bande convoyeuse, caractérisé en ce que le dispositif comporte des surfaces de transport (5, 6) perpendiculaires l'une à l'autre, qui sont agencées sur un châssis (11), lesdites surfaces de transport (5, 6) formant une partie autonome de la bande convoyeuse et pouvant être pivotées dans leur ensemble de 90°, au moyen d'un entraînement de pivotement (7) qui est constitué par deux tiges d'articulation 8 qui engagent le châssis (11) et qui ne sont pas reliées l'une à l'autre et par uniquement un cylindre pneumatique (9) qui coopère avec l'une des tiges d'articulation (8), de telle façon que la surface de transport (5) dressée sur la surface de transport (6) qui s'étend en alignement dans la direction de la bande convoyeuse, est située après un pivotement de 90° en alignement vis-à-vis de la surface de la bande convoyeuse (2), et la surface qui s'étend avant le pivotement en alignement en direction de la bande convoyeuse est située perpendiculairement à la surface de la bande convoyeuse (2).

2. Dispositif pour le retournement d'articles de petite taille, en particulier des paquets, sur une bande convoyeuse, caractérisé en ce que le dispositif comporte des surfaces de transport (5, 6), qui forment une partie autonome de la bande convoyeuse et en ce que la surface de transport (6) est subdivisée en bandes partielles, et en ce que des tiges à angle droit (12) sont agencés entre les bandes partielles, lesdites tiges étant reliées au moyen d'un châssis qui est engagé par les tiges d'articulation (8) d'un entraînement de pivotement (7), l'entraînement de pivotement (7) étant constitué par deux tiges d'articulation (8) qui ne sont pas reliées l'une à l'autre et par un cylindre pneumatique (9) qui coopère avec l'une des tiges d'articulation (8), des tiges à angle droit (12) pouvant être pivotées d'un angle de 90° au moyen de l'entraînement de pivotement (7) à l'intérieur d'intervalles dans les surfaces de transport (5, 6).
